# EUROPEAN PATENT APPLICATION

(11) **EP 3 029 981 A1**
(43) Date of publication of application: **08.06.2016**
(21) Application number: 14831649.0
(22) Date of filing: 28.07.2014
(51) Int. Cl.: H04W 28/04, H04W 72/12, H04W 84/06

(54) **WIRELESS BASE STATION AND MOBILE STATION**

(30) Priority: 31.07.2013 JP 2013159021
(71) Applicant: NTT Docomo, Inc., Tokyo 100-6150 (JP)
(72) Inventor: UCHINO, Tooru, Tokyo 100-6150 (JP); OFUJI, Yoshiaki, Tokyo 100-6150 (JP); KIYOSHIMA, Kohei, Tokyo 100-6150 (JP)
(74) Representative: Hoffmann Eitle
(86) International application number: PCT/JP2014/069811
(87) International publication number: WO 2015/016174

(57) **Abstract**

Even in the case of satellite communications to which LTE is applied, high transmission rates are achieved with avoidance of the occurrence of a delay. A radio base station eNB according to the present invention includes a transmission unit 11 configured to transmit a scheduling signal for a downlink signal and the downlink signal to a mobile station UE. The transmission unit 11 is configured not to wait to receive acknowledgement information for the downlink signal, but to transmit a downlink signal having the same contents as the downlink signal to the mobile station UE in a predetermined number of sub-frames.

## Description

### TECHNICAL FIELD

The present invention relates to a radio base and a mobile station.

### BACKGROUND ART

In LTE (Long Term Evolution), RTT (Round Trip Time) in MAC (Media Access Control) layer is specified as 4 ms.

As a result, LTE is capable of achieving high transmission rates because retransmission by HARQ (Hybrid ARQ (Automatic Repeat Request)) can be performed promptly.

### PRIOR ART DOCUMENT

### NON-PATENT DOCUMENT

Non-patent document 1: 3GPP 36.300

### SUMMARY OF THE INVENTION

At present, application of LTE to satellite communications is under consideration and discussion. Here, since the satellite communications entail long RRT, there is a problem in that the satellite communications to which LTE is applied cannot achieve the RTT in MAC layer specified in present LTE.

This problem is critical in services that should meet severe delay requirements, such as voice communications.

Hence, the present invention has been made in light of the foregoing problem, and has an objective to provide a radio base station and a mobile station which are capable of achieving high transmission rates by avoiding the occurrence of delays, even in the case of satellite communications to which LTE is applied.

In summary, a first feature of the present invention is a radio base station for use in satellite communications to which LTE is applied, the radio base station including a transmission unit configured to transmit a scheduling signal for a downlink signal, and the down link signal to a mobile station. The transmission unit is configured not to wait to receive acknowledgement information for the downlink signal, but to transmit a same downlink signal having the same contents as the downlink signal to the mobile station in a predetermined number of sub-frames.

In summary, a second feature of the present invention is a mobile station capable of performing communications with a radio base station for use in satellite communications to which LTE is applied, the mobile station including a reception unit configured to receive a scheduling signal for a downlink signal and the downlink signal from the radio base station. The reception unit is configured to try to receive the downlink signal in a predetermined number of sub-frames, if the certain scheduling signal is received.

In summary, a third feature of the present invention is a mobile station capable of performing communications with a radio base station for use in satellite communications to which LTE is applied, the mobile station including: a reception unit configured to receive a certain scheduling signal for an uplink signal from the radio base station; and a transmission unit configured to transmit the uplink signal to the radio base station in response to the certain scheduling signal. The transmission unit is configured not to wait to receive acknowledgement information for the uplink signal, but to transmit a same uplink signal having the same contents as the uplink signal to the radio base station in a predetermined number of sub-frames.

In summary, a fourth feature of the present invention is a base station for use in satellite communications to which LTE is applied, the base station including a transmission unit configured to transmit a scheduling signal for an uplink signal to a mobile station. The scheduling signal instructs the mobile station not to wait to receive acknowledgement information for the uplink signal, but to transmit a same uplink signal having the same contents as the uplink signal in a predetermined number of sub-frames.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a radio base station according to the first embodiment of the present invention.
[Fig. 3] Fig. 3 is a functional block diagram of a mobile station according to the first embodiment of the present invention.
[Fig. 4] Fig. 4 is a diagram for explaining operations of the mobile communication system according to the first embodiment of the present invention.
[Fig. 5] Fig. 5 is a diagram for explaining operations of the mobile communication system according to the first embodiment of the present invention.

### MODE FOR CARRYING OUT THE INVENTION

### (Mobile Communication System according to First Embodiment of the Invention)

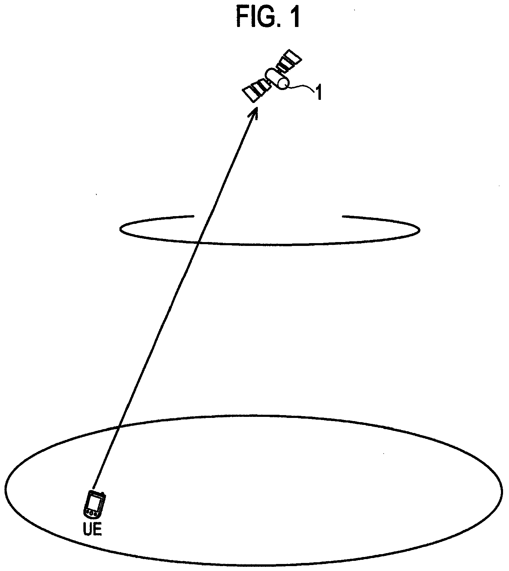

A mobile communication system according to a first embodiment of the present invention is described with reference to Figs. 1 to 5.

As illustrated in Fig. 1, the mobile communication system according to the present embodiment includes a satellite 1. It is to be noted that LTE is applied to satellite communications in the mobile communication system according to the present embodiment. The satellite 1 is equipped with an radio base station eNB of LTE (or functions of the radio base station eNB) . Instead, the radio base station eNB may be installed on the earth and the satellite 1 may operate as a relay apparatus (relay node).

In addition, in the mobile communication system according to the present embodiment, a mobile station UE is assumed to be present in a cell under the radio base station eNB provided in the satellite 1 (or on the earth).

Here, in the mobile communication system according to the present embodiment, the radio base station eNB and the mobile station UE together perform HARQ retransmission control in MAC layer for the uplink and downlink therebetween.

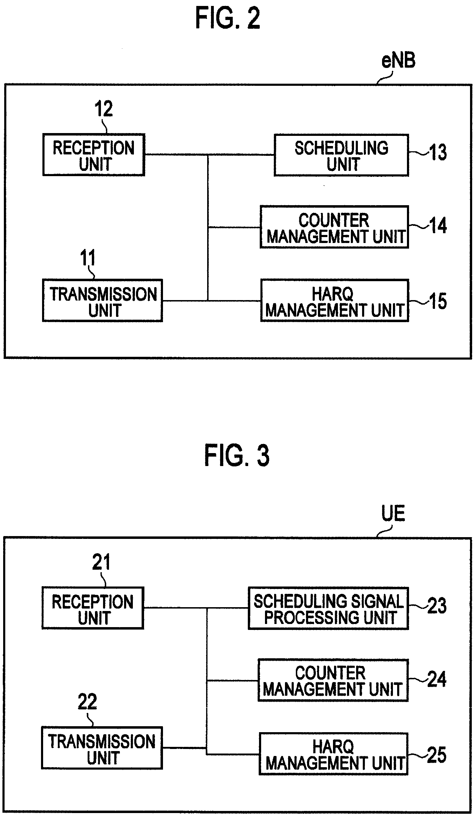

As illustrated in Fig. 2, the radio base station eNB according to the present embodiment includes a transmission unit 11, a reception unit 12, a scheduling unit 13, a counter management unit 14, and an HARQ management unit 15.

The transmission unit 11 is configured to transmit various kinds of signals to the mobile station UE. The reception unit 12 is configured to receive various kinds of signals transmitted by the mobile station UE.

The scheduling unit 13 is configured to perform scheduling processing for the mobile station UE.

The counter management unit 14 is configured to manage the number of times that the transmission unit 11 has transmitted a same downlink signal to the mobile station UE, and the number of times that the reception unit 12 has received a same uplink signal from the mobile station UE, by using counters included in the counter management unit 14 but not illustrated.

The HARQ management unit 15 is configured to manage HARQ retransmission control in MAC layer in cooperation with the mobile station UE.

For example, the transmission unit 11 is configured to transmit a scheduling signal for a downlink signal and the downlink signal to the mobile station UE on the basis of an instruction from the scheduling unit 13.

Here, the transmission unit 11 is configured to operate together with the counter management unit 14 and the HARQ management unit 15 such that, without waiting to receive acknowledgement information (ACK/NACK) for a downlink signal, the transmission unit 11 transmits a same downlink signal having the same contents as the downlink signal to the mobile station UE in a predetermined number (for downlink signals) of sub-frames.

For instance, the transmission unit 11 may be configured to transmit a same downlink signal in five consecutive sub-frames, or may be configured to transmit a same downlink signal five times in every tenth sub-frame.

Here, a pattern of the predetermined number of sub-frames in which a same downlink signal is to be transmitted may be configured to be fixed (semi-static) or be dynamically changed (dynamic).

The transmission unit 11 may be configured to notify the mobile station UE of the aforementioned pattern of sub-frames in which a same downlink signal is to be transmitted.

For example, if the aforementioned pattern of sub-frames is fixed, the transmission unit 11 may be configured to make the pattern notification by signaling in RRC (Radio Resource Control) layer or signaling in MAC layer.

From a time point of reception of the pattern notification, the mobile station UE tries to receive PDCCHs (or downlink signals) based on the pattern.

On the other hand, if the aforementioned pattern of sub-frames is dynamically changed, the transmission unit 11 may be configured to transmit a scheduling signal for each of the same downlink signals mentioned above.

Specifically, the transmission unit 11 may be configured to make a notification of the number (predetermined number) of sub-frames, in which a same downlink signal is to be received, via PDCCHs (Physical Downlink Control Channels), every time scheduling for each same downlink signal is done by the scheduling unit 13.

For example, in the case where a same downlink signal is to be transmitted in five consecutive sub-frames, the transmission unit 11 may be configured to transmit the PDCCH indicating "0" in the first sub-frame, and the PDCCHs indicating "1" in the second to fourth sub-frames.

As a result, even if the mobile station UE fails to receive the scheduling signal for the downlink signal via the PDCCH in the first sub-frame, the mobile station UE can receive the downlink signal by receiving the scheduling signal for the downlink signal via the PDCCH in any one of the second to fourth sub-frames.

Alternatively, the transmission unit 11 maybe configured to transmit the scheduling signal for the downlink signal in only at least one of the aforementioned sub-frames.

In other words, the transmission unit 11 may be configured not to transmit the scheduling signal for the downlink signal in all the aforementioned sub-frames.

For example, even in the case where a same downlink signal is to be transmitted in five consecutive sub-frames, the transmission unit 11 may be configured to transmit the scheduling signal for the downlink signal via the PDCCHs in the first two sub-frames, and not to transmit the scheduling signal for the downlink signal via the PDCCH in any of the third to fifth sub-frames.

To put it differently, the transmission unit 11 may be configured to transmit the downlink signal only via PDSCHs (Physical Downlink Shared Channels) in the third to fifth sub-frames to the mobile station UE.

The mobile station UE can receive the downlink signal by receiving the scheduling signal for the downlink signal via the PDCCH in any one of the first two sub-frames.

Here, the transmission unit 11 can change resource blocks (RB) allocated by each PDCCHs.

Additionally, the transmission unit 11 may be configured to change the aforementioned predetermined number (for downlink signals) depending on a quality of radio link with the mobile station UE.

The quality of radio link assumed to be used is RSRQ (Reference Signal Received Quality), RSRP (Reference Signal Received Power), or CQI (Channel Quality Indicator) in the downlink, for example.

For example, in order to ensure that the mobile station UE can receive the downlink signal, the transmission unit 11 may be configured to increase the aforementioned predetermined number (for downlink signals) if the quality of radio link with the mobile station UE is lower than a predetermined quality.

On the other hand, in order to improve use efficiency of downlink resources, the transmission unit 11 may be configured to decrease the aforementioned predetermined number (for downlink signals) if the quality of radio link with the mobile station UE is higher than the predetermined quality.

In this connection, the transmission unit 11 may be configured to determine the aforementioned predetermined number (for downlink signals) at the initial stage of communications based on the assumption that the quality of radio link between the radio base station eNB and the mobile station UE is low.

Alternatively, the transmission unit 11 may be configured to change the aforementioned predetermined number (for downlink signals) depending on a reception probability of acknowledgement information from the mobile station UE.

For example, in order to improve use efficiency of downlink resources, the transmission unit 11 may be configured to decrease the aforementioned predetermined number (for downlink signals) if the reception probability of positive acknowledgement information (ACK) from the mobile station UE exceeds a predetermined value (or the reception probability of negative acknowledgement information (NACK) from the mobile station UE falls below a predetermined value).

On the other hand, in order to ensure that the mobile station UE can receive the downlink signal, the transmission unit 11 may be configured to increase the aforementioned predetermined number (for downlink signals) if the reception probability of positive acknowledgement information (ACK) from the mobile station UE falls below a predetermined value (or the reception probability of negative acknowledgement information (NACK) exceeds a predetermined value).

Moreover, the transmission unit 11 may be configured to increase the aforementioned predetermined number (for downlink signals) temporarily if no acknowledgement information is received from the mobile station UE (if DTX (Discontinuous Transmission) occurs).

Additionally, the transmission unit 11 may be configured to change the aforementioned predetermined number (for downlink signals) to a certain initial value, at an execution of an Intra-Cell HO procedure (intra-cell handover procedure), an RA procedure (random access procedure), or a connection re-establishment procedure. Here, the certain initial value may be a maximum value of the predetermined number. In other words, if reset processing is performed with the Intra-Cell HO procedure or the like, the transmission unit 11 may autonomously set the maximum value as the initial value after the reset for the time being so that the transmission can be performed under the safest condition.

Further, the transmission unit 11 is configured to transmit a scheduling signal for an uplink signal to the mobile station UE based on an instruction from the scheduling unit 13.

Here, the scheduling signal is configured to instruct the mobile station UE not to wait to receive acknowledgement information (ACK/NACK) for an uplink signal, but to transmit a same uplink signal having the same contents as the uplink signal in a predetermined number (for uplink signals) of sub-frames.

For instance, the scheduling signal may make an instruction to transmit an same uplink signal in five consecutive sub-frames, or may make an instruction to transmit a same uplink signal five times in every tenth sub-frame.

Here, a pattern of the predetermined number of sub-frames in which a same uplink signal is to be transmitted may be configured to be fixed (semi-static) or be dynamically changed (dynamic).

The transmission unit 11 may be configured to notify the mobile station UE of the aforementioned pattern of sub-frames in which a same uplink signal is to be transmitted.

For example, if the aforementioned pattern of sub-frames is fixed, the transmission unit 11 may be configured to make the pattern notification by signaling in RRC (Radio Resource Control) layer or signaling in MAC layer.

From a time point of reception of the pattern notification, the mobile station UE tries to receive PDCCHs or transmit uplink signals based on the pattern.

On the other hand, if the aforementioned pattern of sub-frames is dynamically changed, the transmission unit 11 may be configured to transmit a scheduling signal for each of the same uplink signals mentioned above.

Specifically, the transmission unit 11 may be configured to make a notification of the number (predetermined number) of sub-frames, in which a same uplink signal is allowed to be transmitted, via PDCCHs every time scheduling for each same uplink signal is done by the scheduling unit 13.

For example, in the case where a same uplink signal is allowed to be transmitted in five consecutive sub-frames, the transmission unit 11 may be configured to transmit the PDCCH indicating "0" in the first sub-frame, and the PDCCHs indicating "1" in the second to fourth sub-frames.

As a result, even if the mobile station UE fails to receive the scheduling signal for the uplink signal via the PDCCH in the first sub-frame, the mobile station UE can transmit the uplink signal by receiving the scheduling signal for the uplink signal via the PDCCH in any one of the second to fourth sub-frames.

Alternatively, the transmission unit 11 may be configured to transmit the scheduling signal for the uplink signal in only at least one of the aforementioned sub-frames.

In other words, the transmission unit 11 may be configured not to transmit the scheduling signal for the uplink signal in all the aforementioned sub-frames.

For example, even in the case where a same uplink signal is allowed to be transmitted in five consecutive sub-frames, the transmission unit 11 may be configured to transmit the scheduling signal for the uplink signal via the PDCCHs in the first two sub-frames, and not to transmit the scheduling signal for the uplink signal via the PDCCH in any of the third to fifth sub-frames.

The mobile station UE can transmit the uplink signal by receiving the scheduling signal for the uplink signal via the PDCCH in any one of the first two sub-frames.

Here, the transmission unit 11 can change resource blocks allocated by each PDCCHs.

Additionally, the transmission unit 11 may be configured to change the aforementioned predetermined number (for uplink signals) depending on a quality of radio link with the mobile station UE.

The quality of radio link assumed to be used is RSRQ, RSRP, CQI or the like in the uplink.

For example, in order to ensure reception of the uplink signal from the mobile station UE, the transmission unit 11 may be configured to increase the aforementioned predetermined number (for uplink signals) if the quality of radio link with the mobile station UE is lower than a predetermined quality.

On the other hand, in order to improve use efficiency of uplink resources, the transmission unit 11 may be configured to decrease the aforementioned predetermined number (for uplink signals) if the quality of radio link with the mobile station UE is higher than the predetermined quality.

In this connection, the transmission unit 11 may be configured to determine the aforementioned predetermined number (for uplink signals) at the initial stage of communications based on the assumption that the quality of radio link between the radio base station eNB and the mobile station UE is low.

Additionally, the transmission unit 11 may be configured to change the aforementioned predetermined number (for uplink signals) to a certain initial value, at an execution of an Intra-Cell HO procedure or an RA procedure.

Meanwhile, as illustrated in Fig. 3, the mobile station according to the present embodiment includes a reception unit 21, a transmission unit 22, a scheduling signal processing unit 23, a counter management unit 24, and an HARQ management unit 25.

The reception unit 21 is configured to receive various kinds of signals from the radio base station eNB. The transmission unit 22 is configured to transmit various kinds of signals to the radio base station eNB.

The scheduling signal processing unit 23 is configured to process scheduling signals addressed to the mobile station UE and received via the PDCCHs by the reception unit 21.

The counter management unit 24 is configured to manage the number of times that the transmission unit 22 has transmitted a same uplink signal to the radio base station eNB, and the number of times that the reception unit 21 has received a same downlink signal from the radio base station eNB, by using counters included in the counter management unit 14 but not illustrated.

The HARQ management unit 25 is configured to make management for HARQ retransmission control in MAC layer in cooperation with the radio base station eNB.

For example, the reception unit 21 is configured to receive the downlink signal transmitted by the radio base station eNB in cooperation with the counter management unit 24 and the HARQ management unit 25 based on an instruction from the scheduling signal processing unit 23.

Otherwise, the transmission unit 22 is configured to transmit the uplink signal to the radio base station eNB in cooperation with the counter management unit 24 and the HARQ management unit 25 based on an instruction from the scheduling signal processing unit 23.

Then, the reception unit 21 is configured to try to receive the aforementioned downlink signal in the predetermined number of sub-frames, if a certain scheduling signal is received.

Here, the certain scheduling signal is configured to make an instruction not to wait to receive acknowledgment information for a downlink signal, but to receive a same downlink signal in the predetermined number (for downlink signals) of sub-frames.

Alternatively, the certain scheduling signal is configured to make an instruction not to wait to receive acknowledgment information for an uplink signal, but to transmit a same uplink signal in the predetermined number (for uplink signals) of sub-frames.

Here, the transmission unit 22 is configured to, in response to the certain scheduling signal, transmit a same uplink signal to the radio base station eNB in the predetermined number of sub-frames without waiting to receive the acknowledgement information for the uplink signal.

Meanwhile, the reception unit 21 may be configured to acquire information notifying patterns of the aforementioned predetermined numbers (for uplink signals and for downlink signals) of sub-frames from the radio base station eNB.

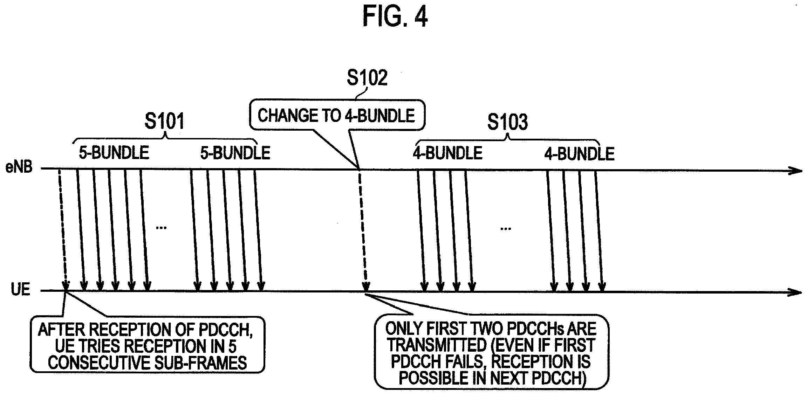

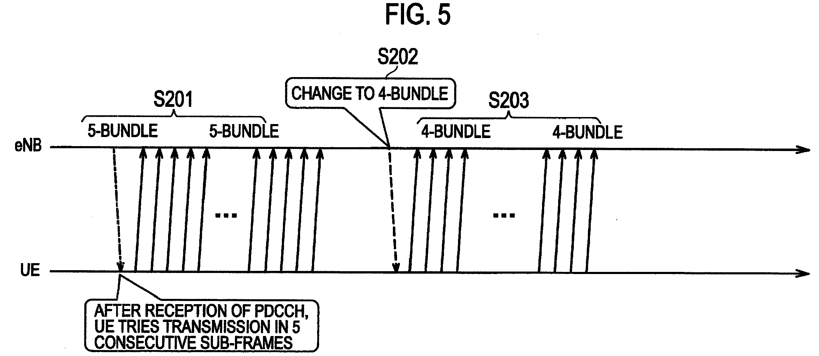

Hereinafter, operations of the mobile communication system according to the present embodiment are described with reference to Figs. 4 and 5.

To begin with, with reference to Fig. 4, description is provided for operations where the radio base station eNB transmits downlink signals to the mobile station UE in the mobile communication system according to the present embodiment.

As illustrated in Fig. 4, in step S101, the radio base station eNB transmits a same downlink signal to the mobile station UE in five consecutive sub-frames without waiting to receive the acknowledgement information.

Here, once the mobile station UE receives a scheduling signal for the above downlink signal, the mobile station UE tries to receive the downlink signal in the five consecutive sub-frames.

Thereafter, in step S102, if the radio base station eNB changes the number of sub-frames, in which a same downlink signal is to be consecutively transmitted, from 5 to 4, the radio base station eNB notifies the mobile station UE of the change via the PDCCHs. Then, in step S103, the radio base station eNB starts to transmit a same downlink signal to the mobile station UE in four consecutive sub-frames without waiting to receive the acknowledgement information.

Incidentally, the radio base station eNB may transmit the scheduling signal for the downlink signal via the PDCCHs in only the first two sub-frames among the four sub-frames.

Next, with reference to Fig. 5, description is provided for operations where the mobile station UE transmits uplink signals to the radio base station eNB in the mobile communication system according to the present embodiment.

As illustrated in Fig. 5, in step S201, once the mobile station UE receives a certain scheduling signal from the radio base station eNB, the mobile station UE transmits a same uplink signal to the radio base station eNB in five consecutive sub-frames without waiting to receive the acknowledgement information.

Thereafter, in step S202, if the radio base station eNB changes the number of sub-frames, in which a same uplink signal is to be consecutively transmitted, from 5 to 4, the radio base station eNB notifies the mobile station UE of the change via the PDCCHs. In step S203, the mobile station UE starts to transmit a same uplink signal to the radio base station eNB in four consecutive sub-frames without waiting to receive the acknowledgement information.

The foregoing features of the present embodiment may be expressed as follows.

In summary, a first feature of the present embodiment is a radio base station eNB for use in satellite communications to which LTE is applied, the radio base station eNB including a transmission unit 11 configured to transmit a scheduling signal for a downlink signal and the downlink signal to a mobile station UE. The transmission unit 11 is configured not to wait to receive acknowledgement information for the downlink signal, but to transmit a same downlink signal to the mobile station UE in a predetermined number of sub-frames.

According to this feature, the radio base station eNB is configured not to wait to receive the acknowledgement information for the downlink signal, but to transmit a same downlink signal to the mobile station UE in the predetermined number of sub-frames. Thus, even in the case of satellite communications to which LTE is applied, the time until the retransmission of the downlink signal can be shortened, and therefore high transmission rates can be achieved.

In the first feature of the present embodiment, the transmission unit 11 may be configured to notify the mobile station UE of a pattern of sub-frames in which the aforementioned same downlink signal is to be transmitted.

According to this feature, if the above pattern is fixed, the pattern does not have to be notified a number of times, and downlink resources can be effectively used.

In the first feature of the present embodiment, the transmission unit 11 may be configured to transmit the scheduling signal for each of the same downlink signals mentioned above.

According to this feature, even when the mobile station UE fails to receive the scheduling signal in the first sub-frame, the mobile station UE can receive the aforementioned downlink signal by receiving the scheduling signal in any of the following sub-frames.

In the first feature of the present embodiment, the transmission unit 11 may be configured to transmit the scheduling signal for the downlink signal in only at least one of the aforementioned predetermined number of sub-frames.

According to this feature, the decrease in the number of transmissions of the scheduling signal allows effective use of downlink resources.

In the first feature of the present embodiment, the transmission unit 11 may be configured to change the aforementioned predetermined number depending on the quality of radio link with the mobile station UE.

According to this feature, if the radio link quality in the downlink between the radio base station eNB and the mobile station UE is lower than a predetermined quality, an increase in the aforementioned predetermined number (for downlink signals) ensures that the mobile station UE can receive downlink signals. Meanwhile, if the radio link quality in the downlink between the radio base station eNB and the mobile station UE is higher than a predetermined quality, a decrease in the aforementioned predetermined number (for downlink signals) enables improvement of use efficiency of downlink resources.

In the first feature of the present embodiment, the transmission unit 11 may be configured to change the aforementioned predetermined number depending on the reception probability of acknowledgement information from the mobile station UE.

According to this feature, if the reception probability of positive acknowledgement information (ACK) from the mobile station UE falls below a predetermined value (or the reception probability of negative acknowledgement information (NACK) from the mobile station UE exceeds a predetermined value), an increase in the aforementioned predetermined number (for downlink signals) ensures that the mobile station UE can receive the downlink signal. Meanwhile, if the reception probability of positive acknowledgement information (ACK) from the mobile station UE exceeds a predetermined value (or the reception probability of negative acknowledgement information (NACK) from the mobile station UE falls below a predetermined value), a decrease in the aforementioned predetermined number (for downlink signals) enables improvement of use efficiency of downlink resources.

In the first feature of the present embodiment, the transmission unit 11 may be configured to change the aforementioned predetermined number to a certain initial value at an execution of at least any one of an Intra-Cell HO procedure (intra-cell handover procedure), an RA procedure (random access procedure) and a connection re-establishment procedure.

According to this feature, even if the radio link quality in the downlink between the radio base station eNB and the mobile station UE is lower than a predetermined quality at the initial stage of communications, it is possible to ensure that the mobile station UE can receive downlink signals.

In summary, a second feature of the present embodiment is a mobile station UE capable of performing communications with a radio base station eNB for use in satellite communications to which LTE is applied, the mobile station UE including a reception unit 21 configured to receive a scheduling signal for a downlink signal and the downlink signal from the radio base station eNB. The reception unit 21 is configured to try to receive the above downlink signal in a predetermined number of sub-frames, if a certain scheduling signal is received.

According to this feature, the radio base station eNB is configured not to wait to receive acknowledgement information for the downlink signal, but to transmit a same downlink signal to the mobile station UE in the predetermined number of sub-frames. Thus, even in the case of satellite communications to which LTE is applied, the time until the retransmission of the downlink signal can be shortened, and therefore high transmission rates can be achieved.

In the second feature of the present embodiment, the reception unit 21 may be configured to acquire information notifying a pattern of the aforementioned predetermined number of sub-frames from the radio base station eNB.

According to this feature, if the above pattern is fixed, the pattern does not have to be notified a number of times, and downlink resources can be effectively used.

In summary, a third feature of the present embodiment is a mobile station UE capable of performing communications with a radio base station eNB for use in satellite communications to which LTE is applied, the mobile station UE including a reception unit 21 configured to receive a scheduling signal for an uplink signal from the radio base station eNB, and a transmission unit 22 configured to transmit an uplink signal to the radio base station eNB in response to the scheduling signal. The transmission unit 22 is configured not to wait to receive acknowledgement information for the uplink signal, but to transmit a same uplink signal to the radio base station eNB in a predetermined number of sub-frames.

According to this feature, the mobile station UE is configured not to wait to receive the acknowledgement information for the uplink signal, but to transmit a same uplink signal to the radio base station eNB in the predetermined number of sub-frames. Thus, even in the case of satellite communications to which LTE is applied, the time until the retransmission of the uplink signal can be shortened, and therefore high transmission rates can be achieved.

In the third feature of the present embodiment, the reception unit 21 may be configured to acquire information notifying a pattern of the predetermined number of sub-frames from the radio base station eNB.

According to this feature, if the above pattern is fixed, the pattern does not have to be notified a number of times, and uplink resources can be effectively used.

A fourth feature of the present embodiment is a radio base station eNB for use in satellite communications to which LTE is applied, the radio base station eNB including a transmission unit 11 configured to transmit a scheduling signal for an uplink signal to a mobile station UE. The scheduling signal may instruct the mobile station UE not to wait to receive acknowledgement information for an uplink signal, but to transmit a same uplink signal having the same contents as the uplink signal in a predetermined number of sub-frames.

According to this feature, the mobile station UE is configured not to wait to receive the acknowledgement information for the uplink signal, but to transmit a same uplink signal to the radio base station eNB in the predetermined number of sub-frames. Thus, even in the case of satellite communications to which LTE is applied, the time until the retransmission of the uplink signal can be shortened, and therefore high transmission rates can be achieved.

In the fourth feature of the present embodiment, the transmission unit 11 may be configured to transmit the scheduling signal in each of the aforementioned predetermined number of sub-frames.

According to this feature, even when the mobile station UE fails to receive the scheduling signal in the first sub-frame, the mobile station UE can transmit the aforementioned uplink signal by receiving the scheduling signal in any of the following sub-frames.

In the fourth feature of the present embodiment, the transmission unit 11 may be configured to transmit the scheduling signal in only at least one of the aforementioned predetermined number of sub-frames.

According to this feature, the decrease in the number of transmissions of the scheduling signal allows effective use of uplink resources.

In the fourth feature of the present embodiment, the transmission unit 11 may be configured to change the aforementioned predetermined number depending on a quality of radio link with the mobile station UE.

According to this feature, if the radio link quality in the uplink between the radio base station eNB and the mobile station UE is lower than a predetermined quality, an increase in the aforementioned predetermined number (for uplink signals) ensures that the radio base station eNB can receive uplink signals. Meanwhile, if the radio link quality in the uplink between the radio base station eNB and the mobile station UE is higher than a predetermined quality, a decrease in the aforementioned predetermined number (for uplink signals) enables improvement of use efficiency of uplink resources.

In the fourth feature of the present embodiment, the transmission unit 11 may be configured to change the aforementioned predetermined number to a certain initial value at an execution of at least any one of an Intra-Cell HO procedure (intra-cell handover procedure), a RA procedure (random access procedure), and a connection re-establishment procedure.

According to this feature, even if the radio link quality in the uplink between the radio base station eNB and the mobile station UE is lower than a predetermined quality at the initial stage of communications, it is possible to ensure that the radio base station eNB can receive uplink signals.

It should be noted that the foregoing operations of the radio base station eNB and the mobile station UE may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the radio base station eNB and the mobile station UE. Otherwise, the storage medium and the processor may be provided as discrete components inside the radio base station eNB and the mobile station UE.

Hereinabove, the present invention has been described in detail by use of the foregoing embodiments. However, it is apparent to those skilled in the art that the present invention should not be limited to the embodiments described in the present specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2013-159021 (filed on July 31, 2013) is incorporated by reference in the present specification.

### INDUSTRIAL APPLICABILITY

As described above, according to the present invention, it is possible to provide a radio base station and a mobile station which are capable of achieving high transmission rates by avoiding delays even in the case of satellite communications to which LTE is applied.

### EXPLANATION OF THE REFERENCE NUMERALS

- 1: satellite
- eNB: radio base station
- UE: mobile station
- 11, 22: transmission unit
- 12, 21: reception unit
- 13: scheduling unit
- 14, 24: counter management unit
- 15, 25: HARQ management unit
- 23: scheduling signal processing unit

## Claims

1. A radio base station for use in satellite communications to which LTE is applied,
the radio base station comprising a transmission unit configured to transmit a scheduling signal for a downlink signal, and the down link signal to a mobile station, wherein
the transmission unit is configured not to wait to receive acknowledgement information for the downlink signal, but to transmit a same downlink signal having the same contents as the downlink signal to the mobile station in a predetermined number of sub-frames.

2. The radio base station according to claim 1, wherein the transmission unit is configured to notify the mobile station of a pattern of sub-frames in which the same downlink signal is to be transmitted.

3. The radio base station according to claim 1 or 2, wherein the transmission unit is configured to transmit the scheduling signal in only at least one of the predetermined number of sub-frames.

4. A mobile station capable of performing communications with a radio base station for use in satellite communications to which LTE is applied,
the mobile station comprising a reception unit configured to receive a scheduling signal for a downlink signal and the downlink from the radio base station, wherein
the reception unit is configured to try to receive the downlink signal in a predetermined number of sub-frames, if the certain scheduling signal is received.

5. The mobile station according to claim 4, wherein the reception unit is configured to acquire information notifying a pattern of the predetermined number of sub-frames from the radio base station.

6. A mobile station capable of performing communications with a radio base station for use in satellite communications to which LTE is applied, the mobile station comprising:
a reception unit configured to receive a certain scheduling signal for an uplink signal from the radio base station; and
a transmission unit configured to transmit the uplink signal to the radio base station in response to the certain scheduling signal, wherein
the transmission unit is configured not to wait to receive acknowledgement information for the uplink signal, but to transmit a same uplink signal having the same contents as the uplink signal to the radio base station in a predetermined number of sub-frames.

7. The mobile station according to claim 6, wherein the reception unit is configured to acquire information notifying a pattern of the predetermined number of sub-frames from the radio base station.

8. A radio base station for use in satellite communications to which LTE is applied, the base station comprising a transmission unit configured to transmit a scheduling signal for an uplink signal to a mobile station, wherein
the scheduling signal instructs the mobile station not to wait to receive acknowledgement information for the uplink signal, but to transmit a same uplink signal having the same contents as the uplink signal in a predetermined number of sub-frames.

9. The radio base station according to claim 8, wherein the transmission unit is configured to transmit the scheduling signal in only at least one of the predetermined number of sub-frames.

10. The radio base station according to any one of claims 1, 2, 3, 8 and 9, wherein the transmission unit changes the predetermined number to a certain initial value at an execution of at least any one of an intra-cell handover procedure, a random access procedure, and a connection re-establishment procedure.
